(19) Europäisches Patentamt
European Patent Office
Office européen des brevets

(11) Publication number: 0 093 075
B1

(12) **EUROPEAN PATENT SPECIFICATION**

(45) Date of publication of patent specification: **30.12.86**

(51) Int. Cl.$^4$: **C 08 F 136/06**, C 08 F 4/70

(21) Application number: **83630072.3**

(22) Date of filing: **21.04.83**

(54) **Preparation of high cis-1,4-polybutadiene.**

(30) Priority: **26.04.82 US 371843**

(43) Date of publication of application:
**02.11.83 Bulletin 83/44**

(45) Publication of the grant of the patent:
**30.12.86 Bulletin 86/52**

(84) Designated Contracting States:
**DE FR GB IT NL**

(56) References cited:
**FR-A-2 139 267**
**FR-A-2 310 362**
**US-A-3 856 764**
**US-A-3 910 869**
**US-A-3 962 375**

**Die Makromolekulare Chemie 139, (1970), 73-81**

(73) Proprietor: **THE GOODYEAR TIRE & RUBBER COMPANY**
**1144 East Market Street**
**Akron, Ohio 44316 (US)**

(72) Inventor: **Puccio, Anthony Joseph**
**746 Deerwood Drive**
**Tallmadge Ohio 44278 (US)**

(74) Representative: **Weyland, Joseph Jean Pierre**
**Goodyear International Tire Technical Center**
**Patent Department Avenue Gordon Smith**
**L-7750 Colmar-Berg (LU)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 093 075 B1

## Description

Technical field

This invention relates to the regulation of the molecular weight of a high-cis 1,4-polybutadiene which has been prepared by polymerizing 1,3-butadiene by means of a catalyst system comprising an aluminum alkyl, soluble nickel salts and a third component which contains fluorine. The third component which contains fluorine should be hydrogen fluoride or hydrogen fluoride complex prepared by reacting hydrogen fluoride with a complexing agent.

Background of the invention

Butadiene-1,3 has been polymerized to form high-cis 1,4-polybutadiene employing organonickel-based catalysts systems and as cocatalyst systems aluminum alkyl compounds and hydrogen fluoride or a hydrogen fluoride complex.

For instance, in the United States Patent 3,856,764 issued December 24, 1974, there is disclosed a process for producing high-cis 1,4-polybutadiene which comprises contacting 1,3-butadiene with a catalyst consisting of (1) at least one organoaluminum compound, (2) at least one nickel compound selected from the class consisting of nickel salts of carboxylic acids, organic complex compounds of nickel and nickel tetracarbonyl, and (3) at least one hydrogen fluoride complex prepared by complexing hydrogen fluoride with one or more members of a class consisting of ketones, esters, ethers, alcohols, nitriles and water.

In United States Patent 3,910,869 issued October 7, 1975, there is disclosed another process for the polymerization of 1,3-butadiene to form polymers containing a high proportion of the butadiene units in the cis-1,4-configuration. This process comprises 1,3-butadiene under solution polymerization conditions with a catalyst comprising (1) an organoaluminum compound, (2) an organonickel compound and (3) hydrogen fluoride.

In the process of all of the aforementioned patents 1,3-butadiene is polymerized to a high-cis 1,4-configuration polybutadiene of fairly high molecular weight in the neighborhood of 3.0 or greater than 3 DSV (dilute solution viscosity).

There are other United States patents which might be mentioned as producing a high-cis 1,4-polybutadiene, such as U.S. Patent No. 3,170,907 issued February 23, 1965.

There are other patents which utilize aluminum alkyls organonickel compounds and fluorine containing compounds to produce polybutadienes having various molecular weights and physical properties. See U.S. Patent No. 3,725,492 issued April 3, 1969.

In many applications of which cis-1,4-polybutadiene can be employed, it is usually desirable to employ a lower molecular weight polymer than those generally obtained from either one of the immediately aforementioned polymerization systems. For example, in the manufacture of tires, particularly automobile tires, it is usually desired to use a high-cis 1,4-polybutadiene having a DSV of about 3 or slightly higher. On the other hand, if one desires to use the high-cis 1,4-polybutadiene as a sealant or in a paint or some other application other than tires it is usually desirable to have a polybutadiene with a DSV of something less than 3, even to a liquid.

The process of the invention described herein deals with the use of various hydrocarbon compounds to regulate the molecular weight of the above-mentioned polymerization systems. The utilization of these molecular weight regulators expands the scope of the organoaluminum/organonickel/fluorine catalyzed 1,3-butadiene polymerization systems in a manner that the molecular weight of the cis-1,4-polybutadiene can be controlled from an extremely high molecular weight elastomer all the way down to a liquid polymer.

In the prior art there are syntheses of various molecular weight polybutadienes which can be produced by an anionic or an emulsion polymerization system by controlling the mechanism of the catalyst, the catalyst level or the chain transfer level, respectively. However, these polymerization systems do not necessarily yield a high-cis 1,4-polybutadiene typical of the aluminum/nickel/fluorine-base solution polymerization systems mentioned above. As an example, in a typical alkyllithium initiated system, which is anionic in nature, the 1,3-butadiene is polymerized generally yielding about 36 to 45 weight percent cis-1,4-polymer, about 48 to 50 percent trans-1,4-polymer and about 8 to 10 percent of the 1,2-structure. Butadiene 1,3 has been polymerized in typical emulsion polymerization systems. These emulsion polymerization systems usually result in the polybutadiene having about 60 percent of the product in the trans-1,4-configuration, about 20 percent in the cis-1,4-structure and about 20 percent in the 1,2-structure.

Very low molecular weight polybutadienes have been synthesized using nickel compounds and aluminum halide compounds in solution polymerization systems. However, these catalyst systems do not yield a very high-cis 1,4 structure in the polybutadiene which is typical of the nickel carboxylate/organoaluminum/fluorine containing systems. They furthermore do not have the flexibility to yield high molecular weight polymers.

The uniqueness of the present invention is that it expands the scope of the high-cis 1,4 directing 1,3-butadiene polymerization systems such that they can be employed for the synthesis of the polymers ranging from an elastomer useful in the production of automobile tires to an oily liquid useful in coatings and in other less demanding applications.

The effect of certain hydrocarbon compounds on the polymer intrinsic viscosity (η) in 1,3-butadiene polymerization systems employing nickel-based catalyst systems was studied by *Sakata et al,* and reported

in *Die Makromolekulare Chemie, 139* (1970), pages 73—81. In these studies the author employed a triethylaluminum/nickel carboxylate/boron trifluoride etherate catalyst system in benzene solvent. The hydrocarbons screened in this study included saturated hydrocarbons, such as propane, n-butane and isobutane. Alpha olefins, such as propylene, butene-1 and isobutene were studied, as well as internal olefins such as cis and trans-butene-2. Concerted diolefins, such as allene and 1,2-butadiene were tried as hydrocarbons to reduce the molecular weight. Further, acetylenes such as methylacetylene, and vinylacetylene, and nonconjugated diolefins, such as 4 - vinylcyclohexene - 1 were attempted to be used as molecular weight regulators. The authors of this paper concluded that saturated hydrocarbons and monoolefins, such as alpha olefins and internal olefins show no effect on the polymer viscosity nor on the conversion. Further, they found that 4-vinylcyclohexene has the effect of lowering the polymer viscosity, however, in order to do so required such amounts as to preclude its employment as a useful molecular weight regulator. The acetylenes did not lower the molecular weight but they did have a very dramatic detrimental effect on polymer yields.

French Patent Publication 2,139,267 discloses the use of monoolefinically unsaturated compounds, such as ethylene, propylene, n-butene-1, n-butene-2, n-pentenes, hexenes, and octenes, vinyl chloride, and vinylidene chloride as molecular weight regulators in homopolymerizations and copolymerizations of 1,3-butadiene which utilize catalyst systems which contain a diluent-soluble organonickel compound and an alkylaluminum sesquihalide.

In a successful preparation of automobile tires it has been observed that a high cis-1,4-polybutadiene which as a Mooney viscosity of between 50 and 60 is desirable for the proper processing of such polybutadiene into automobile tires. In addition, it has been observed that the proper molecular weight of the polybutadiene is important to provide the properties needed to produce long wearing automobile tires.

Summary of the invention

The invention comprises a process for regulating the molecular weight of high cis-1,4-polybutadiene which is prepared by polymerizing 1,3-butadiene under solution polymerization conditions employing as a catalyst (1) at least one organoaluminum compound; (2) at least one organonickel compound selected from the group consisting of nickel salts of carboxylic acids, organic complex compounds of nickel and nickel tetracarbonyl; and (3) hydrogen fluoride or a hydrogen fluoride complex prepared by complexing hydrogen fluoride with a complexing compound selected from the group consisting of ketones, aldehydes, nitriles, esters, ethers, alcohols, phenols, mineral acids containing oxygen, and water or mixtures thereof, wherein the mole ratio of the organoaluminum compound to the organonickel compounds is within the mole ratio of 26/1 to 70/1, the hydrogen fluoride or the hydrogen fluoride complex to the nickel compound is within the mole ratio of 86/1 to 121/1, wherein the mole ratio of the hydrogen fluoride to the complexing compound ranges from 4/1 to 1/1, wherein the nickel compound is employed in an amount ranging from 0.004 to 0.010 parts per 100 parts of butadiene in the polymerization system, wherein the temperature of the polymerization is controlled from about 68°C to about 107°C, and wherein the polymerization is conducted in a continuous process; characterized in that said polymerization is conducted in the presence of small amounts of an olefin selected from the group consisting of ethylene, propylene, 1-butene, 1,5-hexadiene, 1,4-hexadiene, 1,4-pentadiene, and 1,6-heptadiene.

It has been discovered that preparing high cis-1,4-polybutadiene according to the present invention produces a polybutadiene which has less branching, less micro gel and producing a more linear polymer which increases the dilute solution viscosity (DSV)/Mooney ratio.

Detailed description

By the term "organoaluminum compound" is meant that any organoaluminum compound responding to the formula

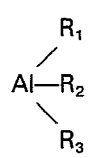

in which $R_1$ is selected from the group consisting of alkyl (including cycloalkyl), aryl, alkylaryl, arylalkyl, alkoxy and hydrogen; $R_2$ and $R_3$ being selected from the group of alkyl (including cycloalkyl) aryl, alkylaryl, and arylalkyl. Representative, but not limiting of the compounds responding to the formula set forth above, are diethylaluminum hydrides, di - n - propylaluminum hydrides, di - n - butylaluminum hydrides, diisobutylaluminum hydrides, diphenylaluminum hydrides, di - p - tolylaluminumhydrides, dibenzylaluminum hydrides, phenylethylaluminum hydrides, phenyl - n - propylaluminum hydrides, p - tolylethylaluminum hydrides, p - tolyl - n - propylaluminum hydrides, p - tolylisopropylaluminum hydrides, benzylethylaluminum hydrides, benzyl - n - propylaluminum hydrides, benzyl - isopropylaluminum hydrides, and other organoaluminum hydrides. Included are trimethylaluminum, triethylaluminum, tri - n - propylaluminum, triisopropylaluminum, tri - n - butylaluminum, triisobutylaluminum, tripentylaluminum, trihexylaluminum, tricyclohexylaluminum, trioctylaluminum, triphenylaluminum, tri -

p - tolylaluminum, tribenzylaluminum, ethyldiphenylaluminum, ethyldi - p - tolylaluminum, ethyldibenzylaluminum, diethylphenylaluminum, diethyl - p - tolylaluminum, diethylbenzylaluminum and other organoaluminum compounds. Also included are diethylaluminum ethoxide, diisobutylaluminum ethoxide and dipropylaluminum methoxide.

The component of the catalyst of this invention which contains nickel may be any organonickel compound. It is preferred to employ a soluble compound of nickel. Thus, the nickel salts of the carboxylic acids and the organic complex compounds of nickel are suitable. These soluble nickel compounds are normally compounds of nickel with mono or bidentate organic ligands containing up to 20 carbon atoms. "Ligand" is defined as an ion or a molecule bound to and considered bonded to a metal atom or ion. "Monodentate" means having one position to which covalence or coordinate bonds with the metal may be formed; "bidentate" means having two positions to which covalence or coordinate bonds to the metal may be formed. By the term "soluble" is meant soluble in the inert solvents utilized in the solution polymerization system. Thus, any salt or organic acid containing from about 1 to about 20 carbon atoms may be employed. Representative, but not exhaustive, of the organonickel compounds are nickel benzoate, nickel acetate, nickel naphthenate, nickel octanoate, bis(α-furyldioxine) nickel, nickel palmitate, nickel stearate, nickel acetylacetonate, nickel salicaldehyde, bis(salicaldehyde)ethylene diamine nickel, bis(cyclopentadienyl)nickel, cyclopentadienyl nickel nitrosyl and nickel tetra carbonyl. The preferred component containing nickel is a nickel salt of a carboxylic acid or an organic complex compound of nickel.

Another component of the catalyst system employed in this invention is a fluorine containing compound. The fluorine may be supplied by hydrogen fluoride, or by hydrogen fluoride being complexed with a member of the class consisting of mono-hydric alcohols, phenols, water, mineral acids containing oxygen, aldehydes, esters, ethers, ketones and nitriles.

The ketone subclass which can be complexed with the hydrogen fluoride can be defined by the formula: R'COR wherein R' and R represent an alkyl, cycloalkyl, aryl and alkylaryl and arylalkyl radical containing from 1 to up to 30 carbon atoms; R' and R may be the same or dissimilar radicals. These ketones represent a class of compounds which have a carbon atom attached by double bond to oxygen, representative but not exhaustive of the ketones useful in the preparation of the hydrogen fluoride complexes of this invention are acetone, methyl ethyl ketone, dibutyl ketone, methyl isobutyl ketone, ethyl octyl ketone, 2,4 - pentanedione, butylcycloheptanone, acetophenone, amyl phenyl ketone, butyl phenyl ketone, benzophenone, phenyl tolyl ketone, and the like. The preferred complexes of the ketones are hydrogen fluoride acetophenone and hydrogen fluoride benzophenone and hydrogen fluoride acetone.

The aldehyde subclass can be defined by the formula RCHO where R represents an alkyl, cycloalkyl, aryl, alkylaryl, and arylalkyl radicals containing from 1 to 30 carbon atoms. The aldehydes have a carbon attached to an oxygen atom by means of a double bond. Representative but not exhaustive of the aldehydes are butyraldehyde, anisaldehyde, cinnamic aldehyde, isobutylaldehyde, heptaldehyde, dodecylaldehyde, benzaldehyde, phenylacetaldehyde, tolualdehyde, m-nitrobenzaldehyde, p-nitrobenzaldhyde, m-hydrobenzaldehyde and the like. The preferred hydrogen fluoride complexes formed from the aldehydes are hydrogen fluoridebenzaldehyde, and hydrogen fluoridetolualdehyde.

The ester subclass which can be complexed with the hydrogen fluoride in this invention can be represented by the formula R'—COOR, wherein R' and R are represented by alkyl, cycloalkyls, aryl, alkylaryl, and arylalkyl radicals containing of from 1 to 30 carbon atoms. These esters contain a carbon atom attached by a double bond to an oxygen atom. Representative but not exhaustive of the esters are ethyl butyrate, ethyl octanoate, isopropyl hexanoate, amyl acetate, hexyl propionate, cetyl acetate, ethyl benzoate, amyl benzoate, phenyl acetate, phenyl butyrate, phenyl benzoate, and the like. The preferred complexes of the HF with the esters are hydrogen fluorideethyl benzoate and hydrogen fluoridephenyl acetate.

The nitrile subclass can be represented by the formula RCN, wherein R represents an alkyl, cycloalkyl, aryl, alkylaryl, and arylalkyl. The nitriles contain a carbon atom attached to a nitrogen atom by a triple bond. Representative but not exhaustive of the nitrile subclass which can be employed to complex the hydrogen fluoride are acetonitrile, butyronitrile, acrylonitrile, benzonitrile, tolunitrile, phenylacetonitrile and the like. The preferred complex prepared from the nitriles and HF in this application is hydrogen fluoride-benzonitrile.

The monohydric alcohols subgroup of the class of compounds which are alcohols can be portrayed as ROH wherein R represents an alkyl, cycloalkyl, aryl and arylalkyl radicals containing from 1 to 30 carbon atoms. Representative but not exhaustive of the alcohols are methanol, ethanol, n-propanol, isopropanol, n-butanol, benzylalcohol, and the like. The preferred complexes are as follows: HF · methanol, HF · butanol, HF · isobutanol, and other alcohol complexes of hydrogen fluoride. The ether subclass which can be complexed with the hydrogen fluoride employed in the present invention can be defined by the formula: ROR', wherein R and R' represent an alkyl, a cycloalkyl, aryl, alkylaryl and arylalkyl containing from 1 to 30 carbon atoms; R and R' may be the same or dissimilar radicals. Representative but not exhaustive of such ethers are dimethylether, diethyl ether, dibutylether, anisole, diphenylether, dicyclohexylether, and the like. The preferred complexes of the ether complex with either hydrogen fluoride are hydrogen fluoride dibutyl etherate, hydrogen fluoride · diphenyl etherate, and the like.

The phenol subgroup of the classes of the compounds can be portrayed as Φ-OH wherein Φ represents the phenyl group. Representative but not exhaustive of the phenol group are phenols, p-cresol, resorcinol,

napthol, hydroquinone and the like. The preferred complexes formed from the phenol and the HF are HF · p-cresol and HF· phenol.

A number of the members of the subgroup of mineral acids containing oxygen will complex with HF. Representative but not exhaustive of the mineral acids subgroup are phosphoric acid, sulfuric acid, nitric acid and the like. The preferred acid complexes formed from the mineral acids subgroup and HF are HF 100% phosphoric acid.

Water, although in a subgroup by itself, will form at least two hydrate complexes, These are HF · $H_2O$ and HF · $2H_2O$.

Hydrogen fluoride which can be employed alone as to fluorine producing compounds in this invention is a limpid liquid which fumes strongly in air, is very poisonous, forms ulcerated sores if it comes in contact with the skin and is very dangerous to handle and to manipulate. Some of these problems can be overcome by complexing the hydrogen fluoride with the complexing agents heretofore mentioned. Some of the advantages obtained by forming the complexes are that they are safer, easier and more accurately measured in the way of handling the hydrogen fluoride component of the catalyst system. Hydrogen fluoride usually complexes to form a complex having a lower vapor pressure, and the complex does not fume as badly as does straight hydrogen fluoride. Hydrogen fluoride boils at 19.7°C, whereas a 40 percent by weight of a hydrogen fluoride diethylether azeotrope or complex boils at about 74°C. When the hydrogen fluoride component is complexed the corrosiveness the hydrogen fluoride is reduced. The hydrogen fluoride complex can be dissolved in a solvent and thus can be handled and charged to the polymerization system as a liquid solution rather than charging hydrogen fluoride as a gas or a limpid liquid. The solvent which can be employed to solubilize the hydrogen fluoride complex can be any of the inert solvents used as the solvent in the solution polymerization of this invention.

The complexes of hydrogen fluoride of this invention are usually prepared by simply dissolving the appropriate amount of the complexing agent, for instance a ketone an ester, an ether, an alcohol or a phenol in a suitable solvent and adding the appropriate amount of hydrogen fluoride in a solvent or as a gas or a limpid liquid and mixing in the solvent system. The hydrogen fluoride being soluble in an inert solvent could be dissolved in a solvent separately and the two solvent systems mixed together. Another possible method would be to dissolve either the hydrogen fluoride or the complexing agent in a suitable solvent and then adding the remaining components.

Another method of mixing would be to dissolve the complexing agent in a solvent and simply bubble gaseous hydrogen fluoride through the system until the complexing agent is reacted fully with the hydrogen fluoride.

The amount of complexing agent cannot specifically be set forth. The amount of complexing agent may be a range depending on the conditions of the reaction system, the hydrogen bonding strength of the complexing agent, the size of the complexing agent, or it may be in equilibrium with the hydrogen fluoride complex and the hydrogen fluoride plus the complexing agent. Usually, the complexing agent is employed at a one to one mole ratio with the hydrogen fluoride, but it is possible to use up to 4 moles of HF to 1 mole of complexing agent or up to 4 moles of complexing agent to 1 mole of HF.

The three component catalyst system of this invention has polymerization activity over a fairly wide range of catalyst concentrations and catalyst ratios. It is believed that the three catalyst components inter-react to form the active catalyst species. As a result, the optimum concentration of any catalyst component is somewhat dependent on the catalyst concentrations of the other two catalyst components. It should be appreciated that while polymerization will occur over a wide range of catalyst concentrations and ratios, polybutadiene having the most desirable properties will be obtained within a narrow range of catalyst component concentrations and ratios. Polymerization can occur when the mole ratio of the organoaluminum compounds (Al) to the nickel salts or nickel complex (Ni) ranges from 26/1 to 70/1; the mole ratio of the fluorine containing compound (F) to the organonickel compound (Ni) ranges from 86/1 to 121/1 and where the hydrogen fluoride to the complexing compound ranges from 4/1 to 1/1. However, a more preferred mole ratio of Al/Ni ranges from 40/1 to 55/1, and the more preferred mole ratio of F/Ni ranges from 95/1 to 110/1, and the more preferred mole ratio of Al/Ni is 47/1 and the more preferred mole ratio of F/Ni is 100/1.

The concentration or the amounts of the catalyst components which are employed in the practice of this invention depend on factors such as the purity of the polymerization system, the polymerization rate desired and the temperature employed. However, in order to produce a high cis 1,4-polybutadiene wherein the Mooney viscosity ranges from 50 and 60 M/L-4 and contains the proper molecular weight as measured by the DSV, it has been determined that the amount of nickel employed as the catalyst in the practice of the present invention should range from 0.004 to 0.010 parts of nickel compound per hundred parts of butadiene in the polymerization system.

It has further been determined that the temperature of the catalyst system should be controlled within a temperature range of about 68°C to about 107°C to maintain the proper ratio between the Mooney viscosity required and the DSV of the polybutadiene.

In general, the polymerization of this invention is carried out in an inert solvent system which may be aliphatic, cycloaliphatic or aromatic in nature. Representative examples of these solvents are pentane, hexane, cyclohexane, butane, benzene, toluene and the like. The solvent/butadiene volume ratio may be varied over a wide range, however, it is usually desired, or more convenient and economical, to use a

solvent/monomer volume ratio of about 3/1 to about 6/1. This is not to say that higher or even lower solvent/monomer volume ratios cannot be employed.

It is usually desirable to conduct the polymerizations of this invention employing air-free and moisture-free techniques.

The molecular weight regulating compound useful in the practice of this invention is either an olefin selected from the group consisting of ethylene, propylene, 1-butene, cis and trans 2-butene or a nonconjugated di-olefin selected from the group consisting of 1,5-hexadiene, 1,4-hexadiene, 1,4-pentadiene and 1,6-heptadiene. These olefins and diolefins are employed in relatively small amounts to control the molecular weight.

As a guide it has been determined that for a typical polymerization utilizing the catalyst system disclosed heretofore in this application that the following amounts of each of the diolefins listed below will result in successful high cis-polybutadiene with the proper Mooney viscosity versus DSV ratios at a catalyst level of nickel at 0.006 parts per hundred of monomer of the nickel compound.

| | |
|---|---|
| Ethylene | 0.10—0.40 |
| Propylene | 1.0—3.0 |
| 1,5-hexadiene | 0.05—0.15 |
| 1,4-hexadiene | 1.5—4.5 |

When cis and trans 2-butene or any of the nonconjugated diolefins are employed, higher amounts of these molecular weight regulators are required.

Description of the preferred embodiments

This invention is illustrated by the following examples which are merely for the purpose of illustration and are not to be regarded as limiting the scope of the invention or manner in which it may be practiced. Unless specifically indicated otherwise, parts and percentages are given by weight.

Example 1

A 16 percent by weight of butadiene/hexane premix which had been previously dried by passing it through a silica gel bed was metered continously into the first reactor of a two reactor chain, each of 0.102 cubic meter capacity and each equipped with sufficient agitation. Butene-1 was added to the premix of butadiene/hexane to control the molecular weight in an amount at 6.0 parts per hundred of monomer (phm). The following catalyst system was independently metered into the butadiene/hexane/butene-1 premix stream in the following order. Triisobutylaluminum at 4% weight solution in hexane, nickel octanoate at a 0.1% weight solution in hexane and a hydrogen fluoride dibutyl ether complex as a 0.3 weight percent solution in hexane, at rates to give the following amounts of catalyst per hundred parts of butadiene, nickel octanoate at 0.006, triisobutyl aluminum/nickel octanoate at a weight ratio of 27/1 and a hydrogen fluoride/nickel octanoate weight ratio of 5.8/1 and the hydrogen fluoride/butyl ether mole ratio of 2/1 was employed to prepare the hydrogen fluoride etherate complex.

The reaction temperature in both reactors was maintained at about 71°C. The total residence time that the butadiene was in the two reactor system was approximately 2-1/2 to 3 hours in duration.

A disproportionated wood rosin (rosin acid) as an 8% by weight solution in hexane was added in an amount of 1.0 parts per hundred of polybutadiene to the cement solution discharging from the second reactor to terminate or shortstop the polymerization. A stabilizer, an alkylated hydroquinone at 0.5 parts per hundred of polybutadiene as an 8 weight percent solution in hexane was next added to the cement and mixed into the cement solution as a polymer stabilizer.

The cement was treated in the conventional manner to isolate the high cis-1,4-polybutadiene, by treatment with boiling water to drive off the solvent, hexane, and the unreacted butadiene and the polymer was dried.

The overall monomer conversion was about 85%.

Typically, the cis-1,4-polybutadiene had a M/L-4′ of about 55 and an DSV of about 3.1.

Example 2

A 22 percent by weight butadiene charge hexane premix which had been previously dried by passing this premix through a silica gel bed was metered continuously to the first charge reactor of a two-reactor polymerization system. The first reactor had a volume of 11.355 cubic meters and the second reactor had a capacity of 28.387 cubic meters.

Polymerization grade butene-1 was added to this premix as a molecular weight control agent to control the molecular weight at a rate of 2.0 parts of butene-1 parts per hundred of butadiene in the premix stream. Also, included in the premix stream were small amounts of isobutene in amounts from 0.5 to 1.5 pph of butadiene and cis-butene-2 in an amount from 2.3 to 3.5 phm and trans-butene-2 in an amount from 2.7 to 4.7 phm.

The following catalyst systems were independently metered into the premix stream into the first reactor in the following order: triisobutylaluminum as a 40 percent by weight solution in hexane, nickel

octanoate as a 4 percent by weight solution in hexane and a hydrogen fluoride butyl ether complex as a 32 percent by weight solution in hexane.

These catalyst components were metered at a rate so as to produce catalyst levels of 0.006 parts per hundred of butadiene of nickel octanoate. The trisisobutylaluminum/nickel octanoate weight ratio was 27/1, the hydrogen fluoride butyl ether complex/nickel octanoate complex weight ratio was 5.8/1. The hydrogen fluoride butyl ether complex was prepared by reacting hydrogen fluoride with butyl ether at a mole ratio of 3/1.

The reaction temperature was maintained at approximately 71°C in the first reactor and the temperature in the second reactor was maintained at about 80°C. The total residence time in the two reactors varied slightly between 1.5 and 2.0 hours. The overall monomer to polymer conversion was approximately 85%.

Rosin acid as a 35 percent solution of hexane by weight was added in an amount to give 1.0 parts per hundred of polybutadiene (phr) formed as a short-stopping agent as the polymerization mixture was being discharged from the second reactor. A stabilizing agent which is an alkylated hydroquinone, as a 20 percent solution by weight, the hexane was added in an amount so that 0.5 phr polybutadiene was added and mixed into the polymerization mixture.

During the total time that this polymerization was conducted a high cis-1,4-polybutadiene having a Mooney value of from 50—60 m/l-4 and having a dilute solution viscosity (DSV) ranging from 3.00 to 3.25.

Mooney viscosity as used in this application is a measure of the viscosity of the raw or uncured or unvulcanized polybutadiene is measured according to ASTM test D-1646. The dilute solution viscosity (DSV) is determined by using about 0.25 grams of the polybutadiene dissolved in 50 ml of toluene and measuring the viscosity at 30°C.

Example 3

This Example shows the effect the catalyst level has on the Mooney versus DSV relationship.

The experiments were conducted in accordance with Example 1 except that the catalyst level in terms of nickel octanoate was varied. The following results were obtained.

TABLE III
Effect of catalyst level on M/L-4′ and DSV

| Nickel octanoate catalyst level, phm | 1-butene phm | M/L-4′ | DSV |
|---|---|---|---|
| 0.0051—0.0072 | 6.0 | 55 | 3.17 |
| 0.0074—0.0093 | 5.0 | 55 | 3.07 |
| 0.0116—0.0150 | 1.0 | 69 | 3.10 |

Example 4

In this Example the effect of reaction temperature on the Mooney versus DSV relationships are illustrated. The experiments were run as in Example 1 except that the temperature was varied in accordance with the temperatures set forth in Table IV.

TABLE IV
Effect of reaction temperature on M/L-4′ and DSV

| Reactor temperature, °C | 1-butene phm | M/L-4′ | DSV |
|---|---|---|---|
| 74—82 | 4.25 | 55 | 3.13 |
| 88—96 | 3.75 | 55 | 3.01 |
| 99—107 | 2.0—3.75 | 55 | 2.93 |

Example 5

In this series of experiments the relationship of the catalyst level versus micro gel and the Mooney and DSV relations are shown.

In these experiments the experiment was conducted as in Example 1 except that the amount of nickel catalyst component was varied in Run No. 3. As can be seen the increase in catalyst amounts results in a proper Mooney viscosity but a lowering of the DSV and a rather substantial increase in micro gel.

TABLE V

| Nickel octanoate catalyst level, phm | 1-butene phm | M/L-4' | DSV | Micro gel, % |
|---|---|---|---|---|
| 0.006 | 6.0 | 50—60 | 3.00—3.25 | 1.2—4.0 |
| 0.006 | 1.5—2.0 | 50—60 | 3.00—3.25 | 2.2—3.4 |
| 0.022 | 0.5 | 50—60 | 2.50—2.95 | 14.9—54.0 |

While certain representative embodiments and details have been shown for the purpose of illustrating the invention, it will be apparent to those skilled in this art that various changes and modifications may be made therein without departing from the scope of the invention.

**Claims**

1. A process for regulating the molecular weight of high cis-1,4-polybutadiene which is prepared by polymerizing 1,3-butadiene under solution polymerization conditions employing as a catalyst (1) at least one organoaluminum compound; (2) at least one organonickel compound selected from the group consisting of nickel salts of carboxylic acids, organic complex compounds of nickel and nickel tetracarbonyl; and (3) hydrogen fluoride or a hydrogen fluoride complex prepared by complexing hydrogen fluoride with a complexing compound selected from the group consisting of ketones, aldehydes, nitriles, esters, ethers, alcohols, phenols, mineral acids containing oxygen, and water or mixtures thereof, wherein the mole ratio of the organoaluminum compound to the organonickel compounds is within the mole ratio of 26/1 to 70/1, the hydrogen fluoride or the hydrogen fluoride complex to the nickel compound is within the mole ratio of 86/1 to 121/1, wherein the mole ratio of the hydrogen fluoride to the complexing compound ranges from 4/1 to 1/1, wherein the nickel compound is employed in an amount ranging from 0.004 to 0.010 parts per 100 parts of butadiene in the polymerization system, wherein the temperature of the polymerization is controlled from 68°C to 107°C, and wherein the polymerization is conducted in a continuous process; characterized in that said polymerization is conducted in the presence of small amounts of an olefin selected from the group consisting of ethylene, propylene, 1-butene, 1,5-hexadiene, 1,4-hexadiene, 1,4-pentadiene, and 1,6-heptadiene.

2. A process according to claim 1 in which the organoaluminum compound is a trialkylaluminum and the organonickel compound is a nickel salt of carboxylic acid.

3. A process according to claim 1 wherein the hydrogen fluoride complex is prepared by complexing hydrogen fluoride with an ether.

4. A process according to claim 1 in which the organoaluminum is a trialkylaluminum, the organonickel compound is a nickel salt of carboxylic acid and the hydrogen fluoride complex is a hydrogen fluoride complex with an ether.

5. A process according to claim 1 in which the organoaluminum is a trialkylaluminum, the organonickel compound is a nickel salt of carboxylic acid and the hydrogen fluoride complex is a hydrogen fluoride complex with an ether, wherein the olefin is 1-butene.

**Patentansprüche**

1. Verfahren zur Regulierung des Molekulargewichts von Polybutadien mit hohem cis-1,4-Gehalt, das hergestellt wird durch Polymerisation von 1,3-Butadien unter Lösungspolymerisationsbedingungen sowie unter Verwendung eines Katalysators aus (1) wenigstens einer Organoaluminiumverbindung, (2) wenigstens einer Organonickelverbindung, ausgewählt aus der Gruppe, die aus Nickelsalzen von Carbonsäuren, organischen Komplexverbindungen von Nickel und Nickeltetracarbonyl besteht, und (3) Fluorwasserstoff oder einem Fluorwasserstoffkomplex, hergestellt durch Komplexbildung von Fluorwasserstoff mit einer komplexbildenden Verbindung, ausgewählt aus der Gruppe, die aus Ketonen, Aldehyden, Nitrilen, Estern, Ethern, Alkoholen, Phenolen, Mineralsäuren, die Sauerstoff enthalten, und Wasser oder Mischungen davon besteht, wobei das Molverhältnis der Organoaluminiumverbindung zu den Organonickelverbindungen innerhalb des Molverhältnisses von 26/1 und 70/1 liegt, der Fluorwasserstoff oder der Fluorwasserstoffkomplex zu der Nickelverbindung innerhalb des Molverhältnisses von 86/1 und 121/1 vorliegt, das Molverhältnis des Fluorwasserstoffs zu der komplexbildenden Verbindung zwischen 4/1 und 1/1 schwankt, die Nickelverbindung in einer Menge von 0,004 bis 0,010 Teilen pro 100 Teile Butadien in dem Polymerisationssystem eingesetzt wird, die Temperatur der Polymerisation zwischen 68°C und 107°C gesteuert wird, und die Polymerisation in kontinuierlicher Phase ausgeführt wird, dadurch gekennzeichnet, daß die Polymerisation in Gegenwart von kleinen Mengen eines Olefins durchgeführt wird, ausgewählt aus der Gruppe, die aus Ethylen, Propylen, 1-Buten, 1,5-Hexadien, 1,4-Hexadien, 1,4-Pentadien und 1,6-Heptadien besteht.

2. Verfahren nach Anspruch 1, dadurch gekennzeichnet, daß die Organoaluminiumverbindung aus Trialkylaluminium besteht und die Organonickelverbindung ein Nickelsalz einer Carbonsäure ist.

3. Verfahren nach Anspruch 1, dadurch gekennzeichnet, daß der Fluorwasserstoffkomplex hergestellt wird durch Komplexbildung von Fluorwasserstoff mit einem Ether.

4. Verfahren nach Anspruch 1, dadurch gekennzeichnet, daß das Organoaluminium ein Trialkylaluminium ist, die Organonickelverbindung ein Nickelsalz einer Carbonsäure ist und der Fluorwasserstoffkomplex ein Fluorwasserstoffkomplex mit einem Ether ist.

5. Verfahren nach Anspruch 1, dadurch gekennzeichnet, daß das Organoaluminium ein Trialkylaluminium ist, die Organonickelverbindung ein Nickelsalz einer Carbonsäure ist und der Fluorwasserstoffkomplex ein Fluorwasserstoffkomplex mit einem Ether ist, und das Olefin aus 1-Buten besteht.

**Revendications**

1. Procédé en vue de régler le poids moléculaire d'un polybutadiène à haute teneur en isomère cis-1,4 préparé en polymérisant du 1,3-butadiène dans des conditions de polymérisation en solution, en utilisant, comme catalyseur (1) au moins un composé d'organoaluminium; (2) au moins un composé d'organonickel choisi parmi le groupe comprenant les sels de nickel d'acides carboxyliques, les composés organiques complexes de nickel et le nickel-tétracarbonyl; et (3) du fluorure d'hydrogène ou un complexe de fluorure d'hydrogène préparé en complexant du fluorure d'hydrogène avec un composé complexant choisi parmi le groupe comprenant les cétones, les aldéhydes, les nitriles, les esters, les éthers, les alcools, les phénols, les acides minéraux contenant de l'oxygène, ainsi que l'eau ou des mélanges de ces composés, le rapport molaire entre le composé d'organo-aluminium et le composé d'organonickel se situant dans l'intervalle allant de 26/1 à 70/1, le rapport molaire entre le fluorure d'hydrogène ou le complexe de fluorure d'hydrogène et le composé de nickel se situant dans l'intervalle allant de 86/1 à 121/1 et le rapport molaire entre le fluorure d'hydrogène et le composé complexant se situant dans l'intervalle allant de 4/1 à 1/1, tandis que le composé de nickel est utilisé en une quantité se situant dans l'intervalle allant de 0,004 à 0,010 partie par 100 parties de butadiène dans le système de polymérisation, la température de la polymérisation étant contrôlée dans l'intervalle allant de 68°C à 107°C, tandis que la polymérisation est effectuée dans un procédé en continu; caractérisé en ce que la polymérisation est effectuée en présence de petites quantités d'une oléfine choisie parmi le groupe comprenant l'éthylène, le propylène, le 1-butène, le 1,5-hexadiène, le 1,4-hexadiène, le 1,4-pentadiène et le 1,6-heptadiène.

2. Procédé selon la revendication 1, caractérisé en ce que le composé d'organo-aluminium est un trialkyl-aluminium, tandis que le composé d'organonickel est un sel de nickel d'acide carboxylique.

3. Procédé selon la revendication 1, caractérisé en ce que le complexe de fluorure d'hydrogène est préparé en complexant du fluorure d'hydrogène avec un éther.

4. Procédé selon la revendication 1, caractérisé en ce que le composé d'organo-aluminium est un trialkyl-aluminium, le composé d'organonickel est un sel de nickel d'acide carboxylique et le complexe de fluorure d'hydrogène est un complexe de fluorure d'hydrogène avec un éther.

5. Procédé selon la revendication 1, caractérisé en ce que le composé d'organo-aluminium est un trialkyl-aluminium, le composé d'organonickel est un sel de nickel d'acide carboxylique et le complexe de fluorure d'hydrogène est un complexe de fluorure d'hydrogène avec un éther, l'oléfine étant de 1-butène.